# EUROPEAN PATENT SPECIFICATION

(11) **EP 0 682 639 B1**
(45) Date of publication and mention of the grant of the patent: **14.01.1998**
(21) Application number: 94907743.2
(22) Date of filing: 02.02.1994
(51) Int. Cl.: B67C 3/20, G01F 11/22, B65B 55/10

(54) **AN APPARATUS AND METHOD FOR DOSING AND FILLING OF LIQUIDS**
VORRICHTUNG UND VERFAHREN ZUM DOSIEREN UND ABFÜLLEN VON FLÜSSIGKEITEN
APPAREIL SERVANT A DOSER UN LIQUIDE ET A EN REMPLIR UN CONTENEUR

(30) Priority: 10.02.1993 SE 9300436
(43) Date of publication of application: 22.11.1995
(73) Proprietor: AB IMIA Development, S-141 38 Huddinge (SE)
(72) Inventor: Pethö, Lajos, F-87000 Limoges (FR); Hakansson, Ivan, F-87100 Limoges (FR)
(74) Representative: Onn, Thorsten
(86) International application number: SE9400081
(87) International publication number: WO9418111

(56) References cited:
- EP-A- 0 353 486
- FR-A- 2 589 235
- GB-A- 2 150 223
- US-A- 4 936 486

## Description

The present invention relates to an apparatus and to a method for metering and filling liquid products into product containers. The invention particularly relates to an apparatus and to a method for metering and filling liquid pharmaceutical products under sterile conditions, such as solutions and emulsions for parenteral administration, and then primarily for intravenous administration.

The development of machines for filling of intravenous injection solutions and infusion solutions began in the 1950s, although low capacity production machines of simple construction were in use at a somewhat earlier date. Apparatus constructed for filling containers with intravenous solutions at capacities of up to 4,000-5,000 x 100 ml/hour and about 3,000 x 1,000 ml/hour are at present available commercially. Such apparatus are normally equipped with electronic control units.

The earlier known apparatus often have a complicated construction and are relatively unreliable in operation. Because of the electronic devices incorporated in such apparatus, the apparatus are also extremely sensitive to the stresses and strains to which the apparatus is normally subjected. It lies within the nature of the processes concerned that a product container filling apparatus will normally operate in a highly moist environment and will often need to be cleaned and sterilized with the use of large volumes of water and steam. Such conditions can readily render the electronics inoperative and result in operational breakdowns.

Another serious problem that is encountered when filling pharmaceutical products into bottles resides in the droplets that often remain on the filling nozzles. Should one single droplet fall onto the mouth of the bottle, there is a risk of microbial growth in the thin liquid film that is present between the stopper and the neck of the bottle after stoppering the bottle. It will be understood that such microbial contamination can have serious consequences.

There is therefore a need of a liquid metering and filling apparatus which is of simple construction, which uses a minimum of electronic equipment, which enables the liquid product to be handled under sterile conditions, and which will ensure that no droplets remain after filling a product container. These objects have been achieved with the apparatus and the method according to the present invention.

The invention provides an apparatus for metering a liquid product and filling a container with said liquid product under sterile conditions. The apparatus is characterized in that it includes a closed casing in which there is mounted at least two liquid product measuring vessels whose volumes are adapted to the volume of the product to be filled into said container, wherein the measuring vessels are open at the top thereof while the lower end of said vessels is mounted sealingly in a bottom plate of the closed casing and can be brought into connection with the surroundings through passageways provided in said bottom plate, and wherein the underside of the bottom plate is in sealing contact with the upper side of a base plate in which conduits are arranged for the delivery of the liquid product to said vessels and for pouring or emptying said product from said vessels and into respective product containers, wherein the closed casing and its bottom plate can be rotated around an axle which extends vertically in relation to the bottom plate and the base plate while maintaining the seal between the underside of the bottom plate and the upper side of the base plate so that the liquid product delivery conduits and liquid product filling conduits are brought successively into connection with the passageways that are provided in the bottom plate and that lead to the measuring vessels, so that liquid product is first introduced into a measuring vessel to a determined volume, whereafter the casing and the bottom plate are rotated about said axle so as to bring this measuring vessel into connection with the conduit through which the liquid product is filled into said product container at the same time as an emptied measuring container is brought by said rotation into a position in which the container is filled with liquid product.

The measuring vessels are preferably cylindrical and are arranged so that their longitudinal axes slope inwardly towards the rotary axle, and so that the passageways or channels in the bottom plate discharge at the lowermost part of the bottom of the measuring containers. Metering of the liquid product is effected by introducing the product into the bottom of the measuring vessel and allowing the vessel to fill until liquid product flows over the upper rim of the vessel.

Furthermore, filling of the product containers with the liquid product is effected by generating an overpressure in the interior of the closed casing with the aid of an inert gas. The gas pressure will then force the product through the emptying or pouring conduit and the gas will blow the last remaining liquid product out through the pouring conduit when the measuring vessel is empty. This effectively prevents the formation of droplets.

The invention also relates to a method of metering a liquid product and filling a product container with said product under sterile conditions, wherein the liquid product is introduced into at least one measuring vessel which has a specific volume and which is open at its upper end, through a delivery conduit arranged in the bottom of said vessel, and is caused to fill the measuring vessel until said liquid product flows over the rim of the vessel, whereafter the thus filled measuring vessel is brought into connection with an outlet or pouring conduit through which the liquid product is poured into the product container. The method is characterized by arranging at least two measuring vessels in a closed container which includes a bottom plate in which the measuring vessels are sealingly mounted, and bringing the measuring vessels into connection with a product delivery conduit and a product filling conduit respectively, through the medium of conduits provided in the bottom of said vessels and through the bottom plate; and in that the underside of the bottom plate is in sealing and sliding contact with the upper side of a base plate which includes one or more product delivery conduits and product pouring conduits, wherein a measuring vessel is filled with liquid product by bringing the bottom plate mounted conduit into connection with a product delivery conduit in the base plate until liquid product flows over the rim of the measuring vessel, whereafter the bottom plate and the closed casing are rotated about a vertical axle so as to bring the bottom conduit of the full measuring vessel into connection with the outlet conduit in the base plate, so as to empty the measuring vessel of said liquid product, while, at the same time, bringing the other measuring vessel into connection with a liquid product delivery conduit.

An overpressure is maintained in the closed casing with the aid of an inert gas, so as to force the liquid product through the outlet conduit when emptying a measuring vessel and thereafter to blow product residues through said outlet conduit.

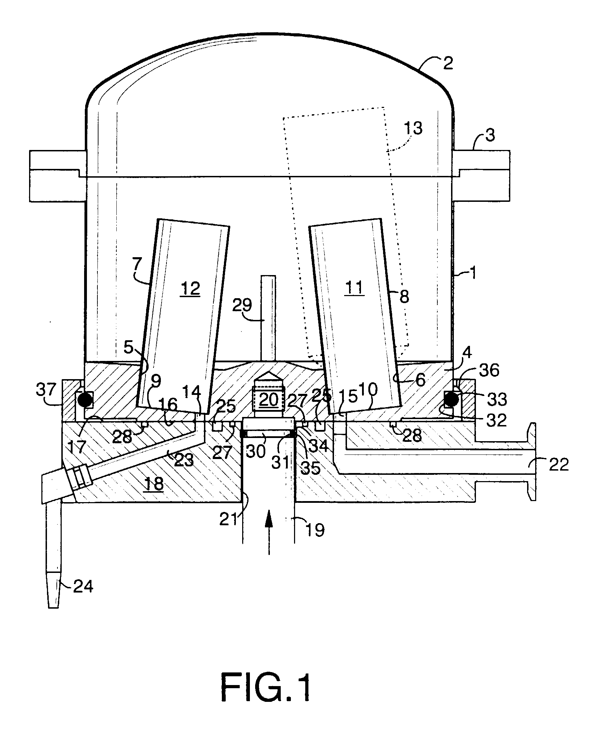

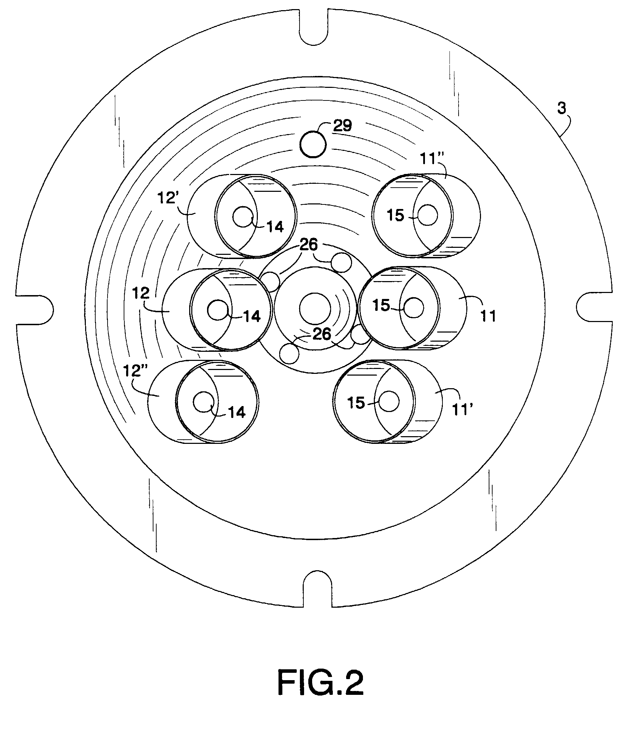

The invention will now be described in more detail with reference to the accompanying drawings, in which Figure 1 is a sectioned view taken from one side of an inventive apparatus; and Figure 2 illustrates the apparatus from above with the cover of the closed casing removed.

As shown in Figure 1, the apparatus includes a closed housing which comprises a base part 1 and an upper part 2 which are held together by means of a flange connection 3. This enables the upper housing part 1 to be removed so as to provide access to the housing interior.

The base part 1 is connected in a gas-tight fashion to a bottom plate 4 which has recesses or cavities 5 and 6 provided in the upper side thereof. Sealingly mounted in the recesses are cylinders 7 and 8 which together with the bottoms 9 and 10 of respective recesses 5 and 6 form measuring vessels 11 and 12. The cylinders 7 and 8 have specific measurements, so as to form measuring vessels of specific volumes. As illustrated by the chain line 13, cylinders of other specific measurements can be mounted in the recesses 5 and 6 so as to obtain measuring vessels of other specific volumes.

The measuring vessels 11 and 12 are mounted such that their respective longitudinal axes will slope inwardly towards the vertical axis of the bottom plate 4, and the bottoms 9 and 10 of respective recesses 5 and 6 are correspondingly inclined to the horizontal plane. Provided at the lowermost parts of the recess bottoms, this lowermost part lying nearest to the centre of the bottom plate 4, are through-penetrating passageways 14 and 15 which provide a connection between the interior of the measuring vessels 11 and 12 and the underside 16 of the bottom plate 4.

The underside 16 of the bottom plate 4 rests on the upper side 17 of a base plate 18 and can be rotated about a vertical axle 19 while sliding on the upper surface of the base plate. The upper end 20 of the axle 19 is fixedly connected to the bottom plate 4, whereas the axle 19 is able to rotate freely in a central hole 21 in the base plate 18. The underside 16 of the bottom plate 4 and the upper side 17 of the base plate 18 seal against one another when stationary and also when in rotation, and the two surfaces are preferably coated with a ceramic material or a hardmetal cemented carbide, to provide a good seal and to generate low friction while minimizing the extent to which particles are torn loose from said mutually engaging surfaces.

Provided in the base plate is a liquid product delivery conduit 22 through which liquid product is introduced into the measuring vessels 11 and 12, and a liquid product pouring or outlet conduit 23 through which the liquid product is emptied from the measuring vessels. The two conduits open into the base plate 18 at positions which coincide with the orifices of the passageways 14 and 15 extending through the bottom plate 4 to respective measuring vessels 11 and 12. Thus, depending on the position of the bottom plate 4 in relation to the base plate 18, either one of the measuring vessels 11 and 12 can be brought into liquid conveying connection with the delivery conduit 22 or the outlet or pouring conduit 23. The sealing connection between the underside 16 of the bottom plate 4 and the upper side 17 of the base plate 18 prevents liquid from leaking at the liquid connections between the passageways 14 and 15 and respective conduits 22 and 23.

The delivery conduit 22 is connected to a conduit extending from a storage container (not shown) in which is stored liquid product with which the product containers are to be filled, and the outlet conduit 23 is connected to a filling nozzle 24 intended for connection with a product container, such as a bottle or plastic sheet package.

The base plate 18 has provided therein an annular channel 25 which communicates with the interior of the closed housing through openings 26 (see Figure 2) provided in the bottom plate 4. Surplus liquid product that flows over the rims of the measuring vessels is collected through the openings 26 and the channel 25 and is returned to the liquid product storage container through a conduit (not shown).

Finally, the base plate 18 also includes two annular gas channels 27 and 28 which are concentrical with the rotary axle 19 of the bottom plate 4 and the closed housing 1, 2, 3. The inner gas channel 27 is located radially inwards of all connecting conduits and other passageways included in the bottom plate 4 and the base plate 18, whereas the outer gas channel 28 is located radially outwards of remaining connecting conduits and passageways in the bottom plate 4 and the base plate 18. An inert gas is introduced at an overpressure into the two gas channels 27 and 28 through delivery channels not shown.

The pressure exerted by the gas in the gas channels 27 and 28 entraps any liquid that may have penetrated out through the space between the bottom plate 4 and the base plate 18 to the region between the two gas channels and prevents this liquid from escaping at the vicinity of the rotary axle 19 or at the outer edge of the bottom plate 4. This provides an essential safety measure against microbial contamination.

The interior of the closed housing 1, 2 can be placed under an overpressure by introducing an inert gas through the gas delivery pipe 29. It is this gas pressure that is effective in purging liquid product from the measuring vessel 12 through the outlet conduit 23 and to blow product residues out through the pouring nozzle 24.

As indicated by the arrow, the rotary axle 19 can be moved upwards, and therewith enable the bottom plate 4 and the closed housing 1, 2, 3 to be moved upwards through a short distance. This will result in the formation of a gap of about 3-5 mm between the underside 16 of the bottom plate 4 and the upper side 17 of the base plate 18, so as to form a space. This space is kept sealed against the surroundings by means of a sealing ring 31 which is fitted into a ringshaped groove 30 provided on the rotary axle 19, and also by means of a sealing ring 33 which is fitted into a peripheral groove 32 provided on the vertical edge of the bottom plate 4. As the rotary axle 19 and the bottom plate 4 are moved upwards, the sealing ring 31 in the groove 30 will be pressed against a shoulder 34 in a peripheral groove 35 in the central hole 21 of the base plate 18. At the same time, the sealing ring 33 in the peripheral groove 32 in the vertical edge of the bottom plate 4 will be pressed against a shoulder 36 on the inside of a vertical flange 37 provided at the periphery of the base plate 18 outwardly of the periphery of the bottom plate 4. This ensures that the aforesaid space will be fully sealed against the surroundings and cannot be contaminated by microbes. Washing solution, water and steam can then be introduced into the space for cleaning and sterilizing the apparatus as desired.

Figure 2 is a schematic view of the inventive apparatus from above, with the upper part 2 of the closed housing removed. The illustrated apparatus includes six measuring vessels referenced 11, 11' and 11" and 12, 12' and 12" respectively. It will be understood that the number of measuring vessels may vary, although the number of vessels will be an even number so that one or more vessels can be filled at the same time as a corresponding number of vessels are emptied. The number of measuring vessels included will, of course, also depend on the size of the vessels used, and when the vessels have a very large volumetric capacity only two vessels need be used, for instance the illustrated vessels 11 and 12 while plugging the inlets and outlets to the remaining vessels. The inventive apparatus is thus highly flexible with regard to the volumes of the liquid product metered to the product containers, and in practice it is possible to dispense quantities of from about 1 ml up to 1,000 ml and more.

The openings or orifices through which liquid product is delivered to and emptied from respective measuring vessels are so arranged in the bottom plate and the base plate that each pair of mutually associated vessels will have openings that are located at a specific distance from the centre of the bottom plate 4, this distance differing from corresponding distances of other pairs of mutually associated vessels. This will ensure that the openings of a given pair of measuring vessels cannot be connected with openings which belong to another pair of measuring vessels as the bottom plate is rotated on the base plate. Thus, the centre-to-centre distances of the measuring vessels 11 and 12 are mutually the same, as are also the centre-to-centre distances of vessels 11' and 12', and of 11" and 12", although these distances are different between each individual pair of vessels, such that in the illustrated case, 11, 12 < 11', 12' < 11", 12". (The reference signs 11, 12 and corresponding signs relate in this instance to the centre-to-centre distances of respective pairs of measuring vessels).

The apparatus also includes devices for rotating the bottom plate 4 and the closed housing 1, 2, 3 on the base plate 18. These devices may comprise, for instance, a drive motor which drives the rotary axle 19 over some suitable transmission means, or which drives a toothed ring (not shown) mounted on the periphery of the bottom plate 4. The construction of such drive devices will be obvious to the skilled person and is not therefore shown in detail.

Although not shown, the apparatus also includes a sensor which is mounted within the closed housing and connected to a main program mechanism (not shown) for manoeuvering the apparatus. The sensor produces a signal when the measuring vessel 11 is full and liquid product begins to flow over the rim of the vessel, this signal being received by the program mechanism, which then produces appropriate control pulses for interrupting the delivery of liquid product, rotating the bottom plate and the closed housing on the base plate, and emptying the liquid product from the measuring vessel 12 into a product container. This program mechanism is preferably distanced from the apparatus itself, so as not to be easily influenced by the demanding environment in and around the mechanism. The construction of such a program mechanism can readily be ascertained by the person skilled in this art.

The method by means of which liquid product is metered and poured when using the inventive apparatus is as follows:

The liquid product is delivered from a storage container (not shown) to respective measuring vessels 11, 11' and 11" through the delivery conduit 22 and passageway 15, until the vessels are full. The delivery conduit 22 will conveniently branch to each of the measuring vessels from a common conduit connected to the storage container, although it is feasible to provide separate delivery conduits for each of the measuring vessels. The liquid product can be delivered to the measuring vessels either with the aid of a pump or with the aid of gas pressure.

When the measuring vessels 11, 11' and 11" respectively are full, the excess liquid product will flow over the rims of respective vessels at their open upper ends. Because the measuring vessels are inclined inwardly towards the rotary axle 19 of the bottom plate, the product will first flow over the vessel rim at that part of the rim which is located nearest the axle. The advantage afforded hereby over measuring vessels which extend vertically is that no elevated liquid meniscus is able to form and disturb the accuracy at which the liquid product is metered. When dimensioning the measuring vessels for metering a specific volume of liquid, it is, of course, necessary to take the inclined position of the vessels into account and also the volume represented by the bottom passageways 14 and 15.

A sensor (not shown) detects when liquid flows over the rim of respective vessels 11, 11' and 11" and sends a signal to a program mechanism (not shown). The program mechanism then delivers control signals which interrupt the supply of liquid product through the delivery conduit 22, and initiate rotation of the bottom plate 4 and the closed housing 1, 2, 3 through an angle of 180° around the rotary axle 19, and also initiate the introduction of an inert gas through the gas delivery pipe 29 so as to maintain an overpressure within the housing. It is not absolutely necessary to provide a separate closure device for interrupting the supply of liquid product from the storage container, since the flow of liquid is automatically interrupted as the bottom plate 4 is rotated in relation to the base plate 18, by virtue of breaking the liquid connections between the delivery conduits 22 and the passageways 15.

The overflow liquid is returned to the storage container, through the openings 26 and the annular passageway 25. The upper surface of the bottom plate 4 slopes down towards the openings 26, to facilitate the return of this excess liquid. The liquid can be returned to the storage container under the influence of the overpressure prevailing in the closed housing, or may be pumped back to the storage container.

The connection between the housing interior and the surroundings is fully closed as the bottom plate 4 rotates in relation to the base plate 18, with the exception of the inert gas delivered through the gas delivery pipe 29 for maintaining a state of overpressure in the housing. Because the outlet and inlet channels at the bottom of each associated pair of vessels are located at a specific distance from the centre of rotation, and because this distance differs from corresponding distances of each alternate pair of vessels, and because the orifices of the delivery and pouring conduits in the base plate 18 are correspondingly positioned, there is no danger of a measuring vessel coming into liquid contact with the wrong inlet or pouring conduit as a measuring vessel is rotated.

Subsequent to having rotated the bottom plate 4 through 180° in relation to the base plate 18, the measuring vessels 11, 11' and 11" will be located in those positions shown for the measuring vessels 12, 12' and 12" in the drawing. The measuring vessels are now in liquid contact with the outlet conduits 23 through the bottom passageways 14, so that liquid product is filled into respective product containers.

As a result of the overpressure prevailing within the closed housing, the liquid product will be forced out from respective measuring vessels 12, 12' and 12" through respective outlet conduits 23 and pouring nozzles 24 and into the product containers, such as bottles or plastic sheet packages. Since the outlets from the inclined measuring vessels are placed at the lowest points of said vessels, no liquid will remain therein. This is thus another advantage afforded by inclining the measuring vessels.

When all liquid in the measuring vessels has been forced out through the outlet conduits 23 and the pouring nozzles 24, the gas pressure remaining in the housing will blowout the last liquid residues through the filling nozzles 24. This clean blowing, or purging, of the pouring nozzles presents all subsequent dripping of liquid product. The inventive apparatus and inventive method therewith provide a very essential advantage, since they greatly reduce the risk of microbial contamination.

As the bottom plate 4 is rotated through 180° on the base plate, those measuring vessels that were emptied in a preceding step are now brought simultaneously into liquid communication with the delivery conduit 22. These measuring vessels are then filled with liquid product at the same time as the corresponding vessels in each pair of vessels are emptied to fill the product containers. The bottom plate and the closed housing are then rotated through a further 180° in the aforedescribed manner, whereafter the vessel filling and emptying procedure is repeated for as long as is disired.

The actual filling of the liquid product into the product containers can be effected in a manner known to the skilled person and with the aid of appropriate known devices. It is essential that sterility can be maintained also during the actual container filling procedure, and the method and apparatus or devices are chosen on the basis of this essential requirement.

With the aid of an inert gas, there is maintained in the gas channels 27 and 28 during the entire filling and emptying sequence a pressure which is higher than the overpressure that prevails within the closed housing 1, 2, 3. This ensures that liquid which is able to penetrate between the undersurface 16 of the bottom plate 4 and the upper surface 17 of the base plate 18 is unable to penetrate outside the area delimited by the two gas channels 27 and 28. This is of essential importance in preventing contamination of the liquid product.

When the apparatus is to be cleaned and/or sterilized, the rotary axle 19 is moved upwards through a short distance, so as to form a gap of 3-5 mm between the bottom plate 4 and the base plate 18. As described in the foregoing, when the rotary axle 19 is thus moved, a seal is obtained between the axle and the base plate by virtue of the groove 30, the sealing ring 31 and the shoulder 34 in the groove 35, and between the base plate 18 and the bottom plate 4 by virtue of the groove 32, the sealing ring 33 and the shoulder 36 on the inside of the vertical flange 37. Thus, as a result of this arrangement, there is obtained between the bottom plate 4 and the base plate 18 a space which is sealed against the surroundings, thereby preventing contamination from without.

All delivery of liquid and gas is cut-off and all liquid is drained from the measuring vessels and the closed housing prior to moving the rotary axle 19 upwards and forming the aforesaid space between the bottom plate 4 and the base plate 18. Washing solution, rinsing water and/or high pressure steam, according to requirements, are now delivered through the product delivery conduit 22 while connecting the outlet conduit 23 to a waste pipe at the same time.

Subsequent to having cleaned and sterilized the apparatus, the rotary axle 19 is returned to its normal position and a sterile, inert gas under slight overpressure is conveniently blown into the apparatus with the intention of cooling said apparatus, until the next liquid metering and container filling process is commenced. This will ensure that the apparatus is kept sterile and fully closed and free from contamination.

The apparatus will preferably be constructed from material that has been found suitable for the sterile handling of liquids. Such material shall be capable of being readily cleaned and sterilized, and may not have rough surfaces on which microorganisms can colonize, and shall also have the requisite mechanical and thermal strength to resist the working temperatures and overpressures applied. Such materials are well known to the skilled person and stainless steel, glass and certain plastic materials have been found suitable in this regard. The choice of material for each individual component lies within the competence of the skilled person.

The inert gas used may be any of the gases normally used in conjunction with the sterile dispersement of liquids. Examples of such gases are nitrogen gas and argon, and possibly also carbon dioxide.

It is essential that the best possible abutment is obtained between the undersurface 16 of the bottom plate 4 and the upper surface 17 of the base plate 18, so as to obtain true sealing abutment and, at the same time, generate the least possible friction between the two plates as they rotate. As will be understood, it is important that the two mutually abutting surfaces are machined or worked to the best possible flatness. It has also been found suitable to coat one, preferably both, of the surfaces with a ceramic material, or with a hard metal, such as a cemented metal carbide, for instance sintered tungsten carbide or nickel carbide, which is then machined to high surface smoothness and flatness. This will provide a highly effective seal between the two surfaces while generating low friction at the same time. Surfaces which are thus treated will also result in a minimum of loosened particles from said surfaces.

The recesses 5 and 6 in the bottom plate 4 may also be conveniently coated with a ceramic material or a hard metallic element, so as to obtain a good seal with the cylinders 7 and 8 forming the measuring vessels 11 and 12.

The mechanical construction of the apparatus in other respects will present no difficulties to the person skilled in this art. The apparatus components such as valves, pumps, conduits, measuring instruments, sensors and like components can be readily chosen from among conventional standard components.

The inventive apparatus and method provide a number of important advantages. For instance, a minimum of electronic devices are used and the sensitive electronic components in the program mechanism can be distanced from the actual metering and pouring apparatus, so as not to be influenced by the conditions surrounding the apparatus. Furthermore, the liquid product can be handled in a sterile fashion from the storage container to the pouring or filling nozzle and effective security is achieved against microbial contamination. In addition, the essential spaces in the apparatus are kept separated from the surroundings even when cleaning and sterilizing the apparatus. Because the liquid product is pressed out to the pouring or filling nozzle with the aid of an inert gas and because this gas is also used to purge the pouring nozzle of the last residues of liquid, a high safety level is achieved against after-dripping of the liquid product and therewith subsequent contamination. The apparatus can also be adapted readily to different volumes of product to be filled in the product containers. All that is required in this respect is to change the existing measuring vessels without normally requiring any further modifications.

Although the inventive apparatus and method have been described in the aforegoing with reference to the accompanying drawings, it will be understood that the illustrated exemplifying embodiment merely constitutes an example and that modifications and variations are possible within the scope of the following Claims.

## Claims

1. An apparatus for metering a liquid product and thereafter filling said product into product containers under sterile conditions, **characterized** in that the apparatus includes a closed casing in which there are mounted at least two essentially cylindrical measuring vessels whose respective volumes are adapted to the volume of the product to be filled into said container, wherein the measuring vessels are open at the top thereof while the lower end of said vessels is mounted sealingly in a bottom plate of the closed casing and can be brought into connection with the surroundings through passageways provided in said bottom plate, and wherein the underside of the bottom plate is in sealing contact with the upper side of a base plate in which conduits are arranged for the delivery of the liquid product and for filling said product into said product container, wherein the closed casing and its bottom plate can be rotated around an axle that extends vertically in relation to the bottom plate and the base plate while maintaining the seal between the underside of the bottom plate and the upper side of the base plate so that the liquid product delivery conduits and liquid product filling conduits are brought successively into connection with respective passageways provided in the bottom plate and leading to the measuring vessels, so that liquid product is first introduced into a measuring vessel to a determined volume, whereafter the casing and the bottom plate are rotated about said axle so as to bring this measuring vessel into connection with the conduit through which the liquid product is filled into said product container at the same time as an emptied measuring container is brought by said rotation into a position in which the container is filled with liquid product, and that said measuring vessels are arranged such that their longitudinal axes slope inwardly towards the rotarary axle; in that the passageways in the bottom plate open out at the lowest part of the bottom of the measuring vessels; and in that metering of the liquid product is effected by introducing the liquid product through the bottom of respective measuring vessels until respective vessels are full and liquid product flows over the rims of respective vessels at their open upper ends.

2. An apparatus according to Claim 1, **characterized** in that the liquid product is emptied from the apparatus by maintaining in the interior of the closed housing an overpressure generated with the aid of an inert gas so that the gas pressure will force liquid product through the pouring conduit and blowout the last residues of the product therethrough.

3. An apparatus according to Claim 1 or 2 **characterized** in that a plurality of measuring vessels are mounted in pairs within the housing; in that each pair of measuring vessels coacts with a liquid product delivery passageway and an outlet passageway through which said liquid product is conducted to fill the product containers wherein the orifices of respective delivery and outlet passageways in the bottom plate and the base plate coacting with each pair of measuring vessels are arranged at a specific distance from the rotary axle, and wherein this distance is different for different pairs of measuring vessels, so that only those delivery and outlet passageways that are intended for a specific pair of measuring vessels will be brought into connection with their respective vessels

4. An apparatus according to any one of Claims 1-3, **characterized** in that the boundary surface between the underside of the bottom plate and the upper plate of the base plate includes two circular gas channels which are concentrical with the rotary axle and to which there is delivered an inert gas at a pressure which is higher than the highest pressure that exists in the interior of the closed housing, wherein the apparatus includes an inner gas channel which is located radially inwards of all orifices of the liquid product delivery and outlet passageways, and further includes an outer gas channel which is located radially outwards of all said delivery and outlet passage ways.

5. An apparatus according to any one of Claims 1-4, **characterized** by an outlet for liquid product that runs over the measuring vessels, said outlet being connected to a liquid product storage tank via a return conduit.

6. An apparatus according to any one of Claims 1-5, **characterized** in that one or preferably both of the mutually sliding surfaces between the bottom plate and the base plate is/are coated with a ceramic material or a cemented metal carbide.

7. An apparatus according to any one of Claims 1-6, **characterized** in that the closed housing, the bottom plate and the rotary axle can be moved axially so as to form a space between the underside of the bottom plate and the upper side of the base plate.

8. A method of metering and filling a liquid product into product containers under sterile conditions, wherein the product is introduced into at least one measuring vessel which is open at its upper end and which has a specific volume through a delivery conduit provided at the bottom of the vessel, until the measuring vessel is filled to capacity and liquid product flows over the rim of the vessel, whereafter the thus filled measuring vessel is brought into connection with an outlet conduit through which the liquid product is filled into a product container, **characterized** in that at least two essentially cylindrical measuring vessels are mounted in a closed container having a bottom plate in which the measuring vessels are sealingly mounted, wherein the measuring vessels are brought into connection with a liquid product delivery conduit and a liquid product outlet and filling conduit through the medium of conduits provided at the bottoms of respective vessels and through the medium of the bottom plate; in that the undersurface of the bottom plate is in sealing and sliding contact with the upper surface of a base plate which includes one or more liquid product delivery conduits and one or more liquid product outlet and pouring conduits, such that a measuring vessel will be filled with liquid product by bringing the conduit at the vessel bottom into connection with a liquid product delivery conduit in the base plate, whereafter the bottom plate and the closed housing are rotated about a vertical axis so as to bring the bottom mounted conduit of the full measuring vessel into connection with the outlet conduit in the base plate for pouring said product into said product container, while bringing the other measuring vessel into connection with a product delivery conduit at the same time, said measuring vessels being arranged with their longitudinal axes sloping inward against said vertical axis, such that said product will flow over the upper edge of said measuring vessels at the position which is closest to said vertical axis.

9. A method according to Claim 8, **characterized** by maintaining an overpressure in the closed housing with the aid of an inert gas, so as to force liquid product through the outlet conduit in a pouring operation and then blowing out residues of liquid product through said conduit.

## Patentansprüche

1. Vorrichtung zum Abmessen eines flüssigen Produkts und zum anschließenden Einfüllen des Produkts in Produktbehälter unter sterilen Bedingungen,
**dadurch gekennzeichnet**,
daß die Vorrichtung ein geschlossenes Gehäuse aufweist, in dem wenigstens zwei im wesentlichen zylindrische Meßgefäße angebracht sind, deren jeweilige Volumina an das Volumen des in den Behälter einzufüllenden Produkts angepaßt sind, wobei die Meßgefäße an ihrer Oberseite offen sind, während das untere Ende der Gefäße in einer Bodenplatte des geschlossenen Gehäuses in abgedichteter Weise angebracht ist und sich durch in der Bodenplatte vorgesehene Passagen mit der Umgebung in Verbindung bringen läßt, und wobei die Unterseite der Bodenplatte in abdichtender Berührung mit der Oberseite einer Basisplatte steht, in der Kanäle für die Zufuhr des flüssigen Produkts und zum Einfüllen des Produkts in den Produktbehälter angeordnet sind, wobei das geschlossene Gehäuse und seine Bodenplatte um eine Achse drehbar sind, die sich in Relation zu der Bodenplatte und der Basisplatte in vertikaler Richtung erstreckt, wobei die Dichtung zwischen der Unterseite der Bodenplatte und der Oberseite der Basisplatte aufrechterhalten bleibt, so daß die Flüssigprodukt-Zuführkanäle und die Flüssigprodukt-Einfüllkanäle nacheinander mit jeweiligen Passagen in Verbindung gebracht werden, die in der Bodenplatte vorgesehen sind und zu den Meßgefäßen führen, so daß flüssiges Produkt zuerst in ein Meßgefäß bis zu einem bestimmten Volumen eingebracht wird, wonach das Gehäuse und die Bodenplatte um die Achse verdreht werden, um dieses Meßgefäß mit dem Kanal, durch den das flüssige Produkt in den Produktbehälter gefüllt wird, zur selben Zeit in Verbindung zu bringen, zu der ein entleertes Meßgefäß durch die Rotation in eine Position gebracht wird, in der das Gefäß mit flüssigem Produkt gefüllt wird, daß die Meßgefäße derart angeordnet sind, daß ihre Längsachsen in Richtung auf die Drehachse nach innen geneigt sind, daß die Passagen in der Bodenplatte sich an dem tiefsten Teil des Bodens der Meßgefäße nach außen öffnen, und daß die Abmessung des flüssigen Produkts durch Einbringen des flüssigen Produkts durch den Boden der jeweiligen Meßgefäße erfolgt, bis die jeweiligen Gefäße voll sind und flüssiges Produkt über die Ränder der jeweiligen Gefäße an deren oberen offenen Enden fließt.

2. Vorrichtung nach Anspruch 1,
**dadurch gekennzeichnet,**
daß das flüssige Produkt aus der Vorrichtung entleert wird, indem in dem Inneren des geschlossenen Gehäuses ein Überdruck aufrechterhalten wird, der mit Hilfe eines Inertgases erzeugt wird, so daß der Gasdruck das flüssige Produkt durch den Auslaßkanal drückt sowie die letzten Reste des Produkts durch diesen ausbläst.

3. Vorrichtung nach Anspruch 1 oder 2,
**dadurch gekennzeichnet**,
daß eine Mehrzahl von Meßgefäßen paarweise in dem Gehäuse angebracht ist, daß jedes Paar von Meßgefäßen mit einer Flüssigprodukt-Zuführpassage und einer Auslaßpassage zusammenwirkt, durch die das flüssige Produkt zum Füllen der Produktgefäße geleitet wird, wobei die Öffnungen der jeweiligen Zuführ- und Auslaßpassagen in der Bodenplatte und der Basisplatte, die mit jedem Paar von Meßgefäßen zusammenwirken, in einer bestimmten Distanz von der Drehachse angeordnet sind, und wobei diese Distanz für unterschiedliche Paare von Meßgefäßen verschieden ist, so daß nur diejenigen Zuführ- und Auslaßpassagen, die für ein bestimmtes Paar von Meßgefäßen vorgesehen sind, mit ihren jeweiligen Gefäßen in Verbindung gebracht werden.

4. Vorrichtung nach einem der Ansprüche 1 bis 3,
**dadurch gekennzeichnet,**
daß die Grenzfläche zwischen der Unterseite der Bodenplatte und der Oberseite der Basisplatte zwei kreisförmige Gaskanäle beinhaltet, die konzentrisch mit der Drehachse sind und denen ein Inertgas unter einem Druck zugeführt wird, der höher ist als der höchste im Inneren des geschlossenen Gehäuses vorhandene Druck, wobei die Vorrichtung einen inneren Gaskanal aufweist, der sich radial innerhalb von allen Öffnungen der Flüssigprodukt-Zuführpassagen und Auslaßpassagen befindet, sowie weiterhin einen äußeren Gaskanal aufweist, der sich radial außerhalb von allen Zuführ- und Auslaßpassagen befindet.

5. Vorrichtung nach einem der Ansprüche 1 bis 4,
**gekennzeichnet durch**
einen Auslaß für flüssiges Produkt, das über die Meßgefäße fließt, wobei der Auslaß über einen Rücklaufkanal mit einem Flüssigprodukt-Vorratsbehälter verbunden ist.

6. Vorrichtung nach einem der Ansprüche 1 bis 5,
**dadurch gekennzeichnet,**
daß eine oder vorzugsweise beide der aufeinander gleitenden Oberflächen zwischen der Bodenplatte und der Basisplatte mit einem Keramikmaterial oder einem Sinterhartmetall beschichtet ist/sind.

7. Vorrichtung nach einem der Ansprüche 1 bis 6,
**dadurch gekennzeichnet**,
daß das geschlossene Gehäuse, die Bodenplatte und die Drehachse axial beweglich sind, um einen Raum zwischen der Unterseite der Bodenplatte und der Oberseite der Basisplatte zu bilden.

8. Verfahren zum Abmessen und Einfüllen eines flüssigen Produkts in Produktbehälter unter sterilen Bedingungen, wobei das Produkt in wenigstens ein Meßgefäß, das an seinem oberen Ende offen ist und ein bestimmtes Volumen aufweist, durch einen am Boden des Gefäßes vorgesehenen Zufuhrkanal eingebracht wird, bis das Meßgefäß auf seine Kapazität gefüllt ist und flüssiges Produkt über den Rand des Gefäßes fließt, wonach das auf diese Weise gefüllte Meßgefäß mit einem Auslaßkanal in Verbindung gebracht wird, durch den das flüssige Produkt in einen Produktbehälter gefüllt wird,
**dadurch gekennzeichnet**,
daß wenigstens zwei im wesentlichen zylindrische Meßgefäße in einem geschlossenen Behälter angeordnet werden, der eine Bodenplatte aufweist, in der die Meßgefäße in abgedichteter Weise angebracht werden, wobei die Meßgefäße vermittels Kanälen, die an dem Boden der jeweiligen Gefäße vorgesehen sind, sowie vermittels der Bodenplatte mit einem Flüssigprodukt-Zufuhrkanal und einem Flüssigprodukt-Auslaß- und Einfüllkanal in Verbindung gebracht werden, daß die untere Oberfläche der Bodenplatte in abdichtendem Gleitkontakt mit der oberen Oberfläche einer Basisplatte steht, die einen oder mehrere Flüssigprodukt-Zuführkanäle sowie eine oder mehrere Flüssigprodukt-Auslaß- und Einfüllkanäle aufweist, so daß ein Meßgefäß mit Flüssigkeit gefüllt wird, indem der Kanal an dem Gefäßboden mit einem Flüssigprodukt-Zufuhrkanal in der Basisplatte in Verbindung gebracht wird, wonach die Bodenplatte und das geschlossene Gehäuse um eine vertikale Achse verdreht werden, um dadurch den am Boden angebrachten Kanal des vollen Meßgefäßes mit dem Auslaßkanal in der Basisplatte in Verbindung zu bringen, um das Produkt in den Produktbehälter zu füllen, während das andere Meßgefäß gleichzeitig mit einem Produkt-Zufuhrkanal in Verbindung gebracht ist, wobei die Meßgefäße derart angeordnet sind, daß ihre Längsachsen nach innen in Richtung auf die vertikale Achse geneigt sind, so daß das Produkt an der Stelle, die sich am nähesten bei der vertikalen Achse befindet, über den oberen Rand der Meßgefäße fließt.

9. Verfahren nach Anspruch 8,
**dadurch gekennzeichnet**,
daß ein Überdruck in dem geschlossenen Gehäuse mit Hilfe eines Inertgases aufrechterhalten wird, um dadurch flüssiges Produkt in einem Ausgießvorgang durch den Auslaßkanal zu drücken und danach Reste des flüssigen Produkts durch den Kanal auszublasen.

## Revendications

1. Appareil pour réaliser, dans des conditions stériles, le dosage d'un produit liquide puis le chargement dudit produit dans des conteneurs de produit, **caractérisé** en ce que l'appareil comprend un carter fermé dans lequel sont montées au moins deux cuves de dosage sensiblement cylindriques dont les volumes respectifs sont adaptés au volume du produit à charger dans ledit récipient, les cuves de dosage étant ouvertes sur le dessus tandis que l'extrémité inférieure desdites cuves est montée de manière étanche dans une plaque inférieure du carter fermé et peut être relié au milieu extérieur par des passages ménagés dans ladite plaque inférieure, et la face inférieure de la plaque inférieure étant en contact étanche avec la face supérieure d'une plaque de base dans laquelle des conduits sont ménagés pour fournir le produit liquide et pour remplir ledit récipient de liquide avec ledit produit, le carter fermé et sa plaque inférieure pouvant être entraînés en rotation autour d'un essieu qui s'étend verticalement par rapport à la plaque inférieure et à la plaque de base tout en maintenant l'étanchéité entre la face inférieure de la plaque inférieure et la face supérieure de la plaque de base de façon que les conduits d'alimentation en produit liquide et les conduits de remplissage en produit liquide soient successivement reliés à des passages respectifs ménagés dans la plaque inférieure et aboutissant aux cuves de dosage, de façon qu'un volume déterminé du produit liquide soit d'abord introduit dans une cuve de dosage, après quoi le carter et la plaque inférieure sont entraînés en rotation autour dudit essieu pour relier cette cuve de dosage au conduit par l'intermédiaire duquel ledit récipient de produit est rempli de produit liquide, tandis qu'en même temps un récipient de dosage vidé est placé du fait de ladite rotation dans une position dans laquelle le récipient se remplit de produit liquide, et en ce que lesdites cuves de dosage sont agencées de façon que leurs axes longitudinaux soient inclinés vers l'intérieur dans la direction de l'essieu rotatif; en ce que les passages de la plaque inférieure débouchent dans la partie inférieure du fond des cuves de dosage; et en ce que le dosage du produit liquide s'effectue en introduisant le produit liquide à travers le fond des cuves de dosage respectives jusqu'à ce que les cuves respectives soient pleines et que le produit liquide déborde des cuves respectives au niveau de leurs extrémités supérieures ouvertes.

2. Appareil selon la revendication 1, **caractérisé** en ce que le produit liquide est déchargé de l'appareil en maintenant à l'intérieur du carter fermé une surpression créée à l'aide du gaz inerte de façon que la pression du gaz fasse jaillir le produit liquide par le conduit de déversement et expulse par celui-ci les derniers résidus du produit.

3. Appareil selon la revendication 1 ou 2, **caractérisé** en ce que plusieurs cuves sont montées par paires dans le carter; en ce que chaque paire de cuves de dosage coopère avec un passage d'alimentation en produit liquide et un passage sortie par lequel ledit produit liquide est conduit pour remplir les récipients de produit, les orifices des passages d'alimentation et de sortie respectifs de la plaque inférieure et de la plaque de base qui coopèrent avec chaque paire de cuves de dosage étant disposés à une distance spécifique de l'essieu rotatif, et cette distance étant différente pour les différentes paires de cuves de dosage, de façon que seuls les passages d'alimentation et de sortie destinés à une paire spécifique de cuves de dosage soient reliés à leurs cuves respectives.

4. Appareil selon l'une quelconque des revendications 1 à 3, **caractérisé** en ce que la surface délimitant la face inférieure de la plaque inférieure et la plaque supérieure de la plaque de base comporte deux canaux circulaires de gaz qui sont concentriques à l'essieu rotatif et auxquels est fourni un gaz inerte à une pression qui est supérieure à la pression maximale existant à l'intérieur du carter fermé, l'appareil comprenant un canal intérieur de gaz situé radialement vers l'intérieur de tous les orifices des passages d'alimentation et de sortie de produit liquide, et comprend en outre un canal extérieur de gaz situé radialement vers l'extérieur de tous lesdits passage d'alimentation et de sortie.

5. Appareil selon l'une quelconque des revendications 1 à 4, **caractérisé** par une sortie pour produit liquide qui déborde des cuves de dosage, ladite sortie étant reliée à un réservoir de stockage de liquide par l'intermédiaire d'un conduit de retour.

6. Appareil selon l'une quelconque des revendications 1 à 5, **caractérisé** en ce qu'une ou, de préférence, les deux surfaces coulissant mutuellement entre la plaque inférieure et la plaque de base est/sont revêtu(es) d'une matière céramique ou d'un carbure métallique fritté dur.

7. Appareil selon l'une quelconque des revendications 1 à 6, **caractérisé** en ce que le carter fermé, la plaque inférieure et l'essieu rotatif peuvent se déplacer axialement de façon à former un espace entre la face inférieure de la plaque inférieure et la face supérieure de la plaque de base.

8. Procédé pour doser et charger dans des conditions stériles un produit liquide dans des récipients de produit, dans lequel le produit est introduit, par un conduit d'alimentation ménagé au fond de la cuve, dans au moins une cuve de dosage qui est ouverte à son extrémité supérieure et qui a un volume spécifique, jusqu'à ce que la cuve de dosage soit remplie au maximum de sa capacité et que le produit liquide déborde de la cuve, après quoi la cuve de dosage ainsi remplie est reliée à un conduit de sortie par l'intermédiaire duquel le produit liquide est chargé dans un récipient de produit, **caractérisé** en ce qu'au moins deux cuves de dosage sensiblement cylindriques sont montées dans un récipient fermé à plaque inférieure dans lequel les cuves de dosage sont montées de manière étanche, les cuves de dosage étant reliées à un conduit d'alimentation en produit liquide et un conduit de sortie et de remplissage de produit liquide par l'intermédiaire de conduits disposés au fond des cuves respectives et par l'intermédiaire de la plaque inférieure, en ce que la face inférieure de la plaque inférieure est de manière étanche et coulissante au contact de la face supérieure d'une plaque de base qui comporte un ou plusieurs conduits d'alimentation en produit liquide et un ou plusieurs conduits de sortie et de déversement de produit liquide, de façon qu'une cuve de dosage soit remplie de produit liquide en reliant le conduit situé au fond de la cuve avec un conduit d'alimentation en produit liquide situé dans la plaque de base, après quoi la plaque inférieure et le carter fermé sont entraînés en rotation autour d'un axe vertical afin de relier le conduit monté au fond de la cuve de dosage pleine au conduit de sortie situé dans la plaque de base pour déverser ledit produit dans ledit récipient de produit, tout en reliant en même temps l'autre cuve de dosage au conduit d'alimentation en produit, lesdites cuves de dosage étant agencées avec leurs axes longitudinaux inclinés vers l'intérieur contre ledit axe vertical, de façon que ledit produit déborde par dessus lesdites cuves de dosage à l'endroit le plus proche dudit axe vertical.

9. Procédé selon la revendication 8, **caractérisé** par le maintien d'une surpression dans le carter fermé à l'aide d'un gaz inerte, de façon à faire jaillir le produit liquide par le conduit de sortie lors d'un déversement, puis à expulser par ledit conduit les résidus de produit liquide.
